# EUROPEAN PATENT SPECIFICATION

(11) **EP 0 269 411 B1**
(45) Date of publication and mention of the grant of the patent: **08.03.1995**
(21) Application number: 87310347.7
(22) Date of filing: 24.11.1987
(51) Int. Cl.: G11B 17/03, G11B 23/03

(54) **Information memory medium**
Informationsspeichermedium
Milieu pour le stockage d'informations

(30) Priority: 28.11.1986 JP 281951/86
(43) Date of publication of application: 01.06.1988
(73) Proprietor: KABUSHIKI KAISHA TOSHIBA, Kawasaki-shi, Kanagawa-ken 210 (JP); Toshiba Automation Equipment Engineering Limited, Kawasaki-shi (JP)
(72) Inventor: Inage, Nobuo c/o Patent Division, Minato-ku Tokyo (JP); Odawara, Kazuharu c/o Patent Division, Minato-ku Tokyo (JP); Yamaguchi, Ryoji c/o Patent Division, Minato-ku Tokyo (JP)
(74) Representative: Kirk, Geoffrey Thomas

(56) References cited:
- EP-A- 0 099 005
- EP-A- 0 186 195
- EP-A- 0 195 330
- EP-A- 0 230 963
- EP-A- 0 233 644
- IBM TECHNICAL DISCLOSURE BULLETIN vol.29, no. 5, October 1986, pages 2165-2166, New York, US; "Dis hub"
- RESEARCH DISCLOSURE no. 241, May 1984, p.221; Havant, Hampshire, GB; "Disk hub"
- D4=EP-A-0186195
- D3=EP-A-0099005

## Description

This invention relates to the structure of a recording disc and in particular to an optical recording disc for use with information processing apparatus.

It has become known for information processing apparatus to employ an optical recording disc for the recording on, and reproducing of, image information.

EP-A-0195330 discloses a flexible magnetic diskette comprising a flexible plastic disc having a central hole. A holder is secured to the disc around the periphery of the central hole. The holder, which is also of plastics material, has a flat lower surface and a magnetic attractible body is located in a recess in the flat lower surface. The diskette is located in a hard case which has an opening in the underside thereof. In use, the flat lower surface of the diskette rests upon a rotary table and is attracted to the table by a magnet in the surface of the table. The diskette is also in driving relation with the table by means of a drive pin protruding upwards from the table and entering into a hole in the holder of the diskette.

EP-A-0233644 was published after the priority date of the present application but has an earlier priority date. It discloses a recording disc having a disc-shaped body and a centering member projecting from the underside of the body and which, in use, projects into a recess in a turntable in order to center the disc-shaped body on the turntable and an annular part of the disc-shaped body surrounding the centering member rests upon a support surface of the turntable. The centering member includes a magnetically attractable member which, in use, is attracted towards, but spaced from, magnetic means in the recess in the turntable.

EP-A-0099005 discloses a magnetic recording disc in which a floppy disc has a disc holder provided at its centre and this is formed of magnetic material. In use, the floppy disc is rotated by a turntable and a flat lower surface of the disc holder rests upon the top surface of the turntable. A magnet is located in a recess on the top surface of the turntable but the disc holder does not project into this recess.

EP-A-0186195 discloses a disc cartridge player in which a cartridge case comprises upper and lower parts. The upper part has a disc stabilizer which is movable relative to the upper part. The disc stabilizer has a portion of magnetic material located on its underside. The lower part of the case has a central opening formed in it. The disc containing the recording medium has a central opening but does not have a central hub and is located in the case between the upper and lower parts. In use, a turntable projects through the central opening in the lower part of the case and engages the underside of the disc. A central part of the turntable projects through the central opening in the disc. The disc stabilizer is pushed towards the turntable so as to engage the upper side of the disc and the magnetic material on the disc stabilizer is attracted towards a magnet in the central part of the turntable. The disc is thus clamped between the turntable and the disc stabilizer.

An object of the present invention is to provide an improved recording disc.

According to the present invention, there is provided a recording disc adapted to be supported on a turntable of a drive mechanism so as to be rotated therewith, said recording disc comprising a disc-shaped body having a central opening and a recording layer on the body for storing information, a centering member disposed at the centre of the disc-shaped body for centering the disc on the turntable, the coefficient of thermal expansion of the centering member being substantially the same as that of the disc-shaped body and the centering member including a magnetically attractable member; the dimensions of the centering member being such that, in use, an annular part of the disc-shaped body surrounding the centering member engages with a support surface of the turntable and the centering member enters into a recess in the turntable with the attractable member attracted towards, but spaced from, a magnetic means on the turntable; the outer surface of the part of the centering member which enters into the recess has an annular depression in it; the magnetically attractable member is in the form of a flat annular plate located in the depression and bonded to the centering member; characterized in that the centering member has a ring-shaped projection coaxial with the centre thereof and which projects into the central opening of the disc-shaped body and is bonded to the disc-shaped body.

The recording disc may be provided with an optical recording layer and the body may be of optically transparent material. In a preferred construction of the recording disc, a second disc-shaped body is secured parallel with and spaced from the first disc-shaped body, each being provided with a centering member extending axially out from the bodies to locate each magnetic member axially outwardly from the bodies so that a double sided recording disc is provided.

In order that the invention may be more readily understood, it will now be described, by way of example only, with reference to the accompanying drawings, in which:-
Figure 1 is a perspective view showing the outer appearance of an information memory medium of the present invention and information processing apparatus;
Figure 2 is a side view, partially in cross-section, of the apparatus with the information memory medium according to the present invention;
FIGURE 3 is a side view, partially in cross-section, of the apparatus with the information memory medium mounted on the drive mechanism according to the present invention;
FIGURE 4 is an enlarged sectional elevational view of the information memory medium of the present invention; and
FIGURE 5 is an enlarged plan view of an attractable member of the information memory medium of the present invention.

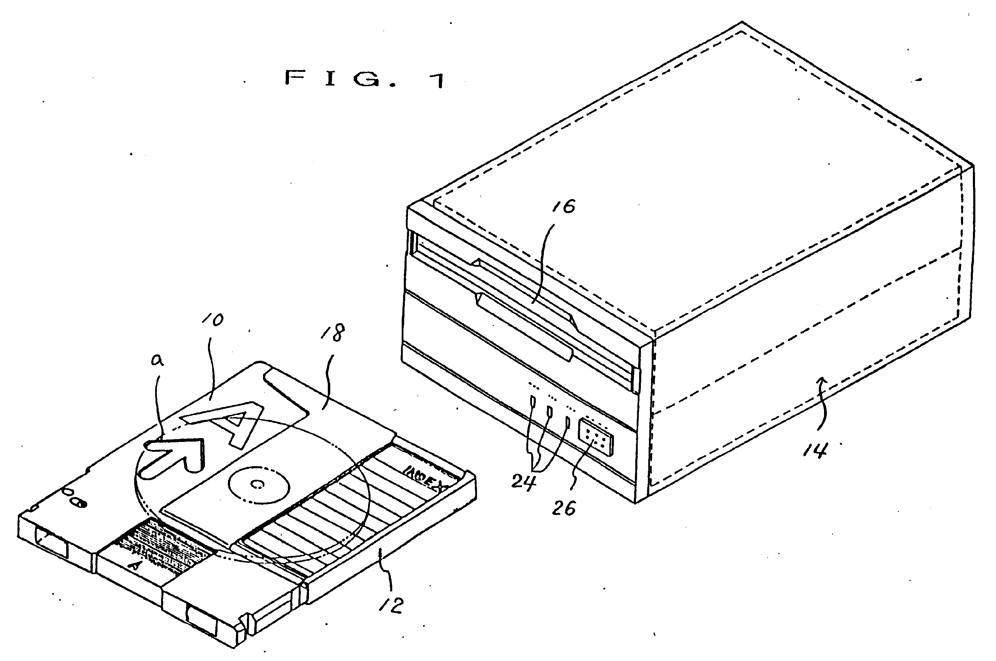

Referring now to the drawings, wherein like reference numerals designate identical or corresponding parts throughout the several views, and more particularly to FIGURE 1 thereof, an information memory medium such as an optical recording disk is generally designated 10. Optical recording disk 10 is used for recording of reproducing information, and is accommodated in a cartridge 12.

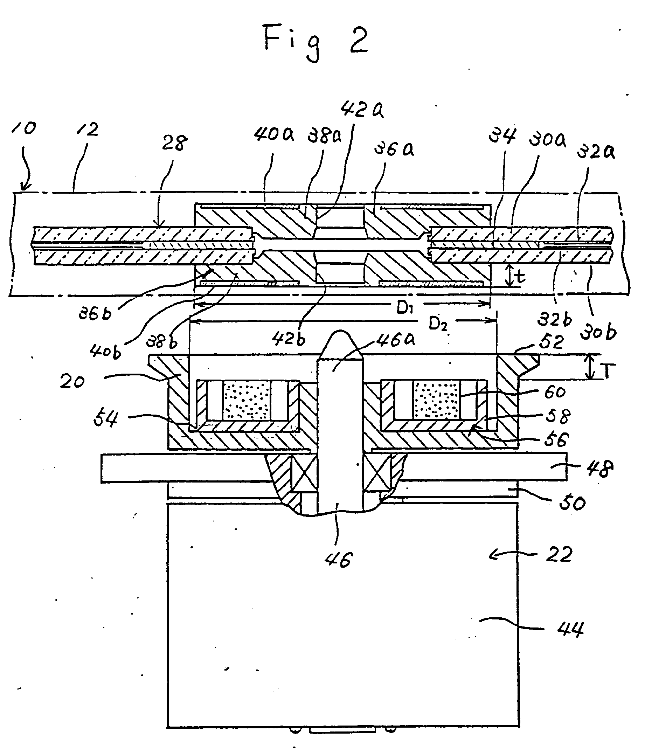

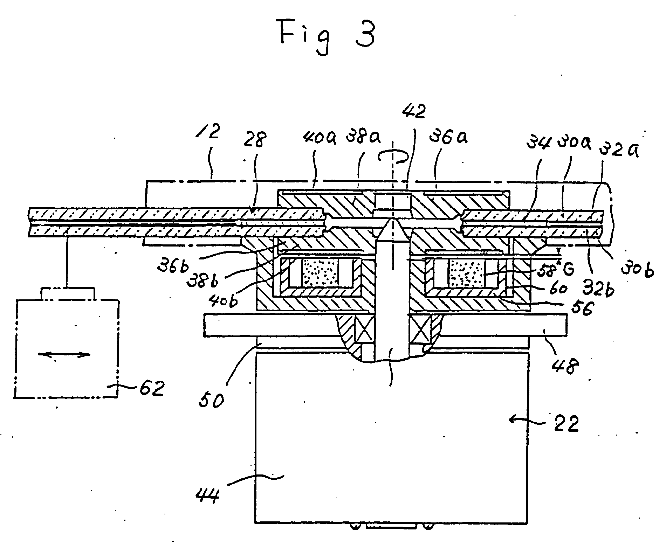

As shown in FIGURE 1, cartridge 12 including optical recording disk 10 is adapted to be inserted into an information processing apparatus 14 through a medium slot 16 thereof. Optical recording disk 10 is automatically introduced into apparatus 14 in the direction of an arrow as shown in FIGURE 1, by a medium guiding/loading mechanism (not shown). During this operation, a shutter 18 provided on cartridge 12 is opened so as to expose the center portion of optical recording disk 10. As shown in FIGURES 2 and 3, thereafter, optical recording disk 10 is automatically mounted on a turntable 20 located in a drive mechanism 22 for rotating optical recording disk 10. A state indicator 24 and a cartridge eject switch 26 are disposed at the bottom right of the front of apparatus 14. State indicator 24 indicates an apparatus operation state, a ready state or a cartridge inserted state. Cartridge eject switch 26 is pressed by an operator when cartridge 12 is ejected from apparatus 14 through slot 16.

A body 28 of optical recording disk 10 has two disk-shaped substrates 30a and 30b, and recording layers 32a and 32b. Substrates 30a and 30b are formed from glass or optically transparent plastic materials, such as acrylic resin, polycarbonate, and the like. Also, substrates 30a and 30b take the form of a disk having an internal diameter of about 15mm, an external diameter of about 130mm and a thickness of about 1.2mm. The two substrates 30a and 30b are held together through an inner spacer 34 and an outer spacer (not shown). Recording layers 32a and 32b made of material including Te are deposited on inner surfaces of substrates 30a and 30b, respectively. Information is recorded in the form of pits on recording layers 32a and 32b.

Also, optical recording disk 10 is provided with attractable members 36a and 36b at the central portions of the respective outer surfaces of substrates 30a and 30b. Attractable members 36a and 36b are disk-shaped and have centering members 38a and 38b and magnetic members 40a and 40b. Centering members 38a and 38b are formed of a material whose coefficient of thermal expansion resembles that of substrates 30a and 30b and have central holes 42a and 42b for centering body 28 on turntable 20. Magnetic members 40a and 40b are completely flat and formed of a metal plate, such as Cr stainless steel and are attached to centering members 38a and 38b.

Even if optical recording disk 10 is subjected to any thermal effect such as a change of ambient temperature, magnetic members 40a and 40b may be spaced so as to absorb the difference in the degree of thermal expansion between magnetic members 40a and 40b, and the combination of substrates 30a and 30b and centering members 38a and 38b, attributable to their different coefficients of thermal expansion as will be explained in more detail below. Thus, information may be processed reliably and stably without causing any distortion in substrates 30a and 30b of optical recording disk 10.

Drive mechanism 22 for rotating optical recording disk 10 has a DC motor 44 for a drive source, a turntable 20 mounted on a rotating shaft 46 of motor 44, a frame 48 for supporting motor 44, and a control board 50 for controlling the operation of motor 44.

Turntable 20 is formed of nonmagnetic metal and has a support surface 52 perpendicular to shaft 46. Also, turntable 20 is formed with a circular depression 54. Depression 54 is coaxial with shaft 46, and opens towards support surface 52. Depression 54 has a magnetic attraction member 46 including a ring-shaped yoke 58 and a magnet 60. Magnetic attraction member 56 magnetically attracts attractable members 36a and 36b provided on optical recording disk 10.

Thus, housed in depression 54, magnetic attraction member 56 may fully exhibit its attraction force for mounting optical recording disk 10 on turntable 20. Also, diameter D₂ of depression 54 is greater than diameter D₁ of attractable members 36a and 36b provided on optical recording disk 10. The distance between top faced of yoke 58 and magnet 60, and support surface 52 of turntable 20 is defined as a reference distance T. Distance T is greater than a height t of the projection of attractable members 36a and 36b provided on optical recording disk 10. Body 28 of optical recording disk 10, therefore, is mounted so as to keep direct contact with support surface 52 of turntable 20 when attractable member 30b, for example, is attracted by magnet 60 of magnet attraction member 56.

Rotating shaft 46 of motor 44 has a positioning portion 46a to support, rotate, and locate optical recording disk 10. Positioning portion 46a engages with center hole 42b of lower attractable member 36b when the optical recording disk 10 is mounted on the turntable 20.

As shown in FIGURE 3, an optical head 62 is located opposite the undersurface of optical recording disk 10 which is rotated by drive mechanism 22. Optical head 62 is moved by a linear motor (not shown) in the radial direction of optical recording disk 10. Optical head 62 has a semiconductor laser, an objective lens, a photo-detector, and so forth, to perform information processing, such as recording or reproducing, on or from a recording layer 32b formed on underside substrate 30b of optical recording disk 10.

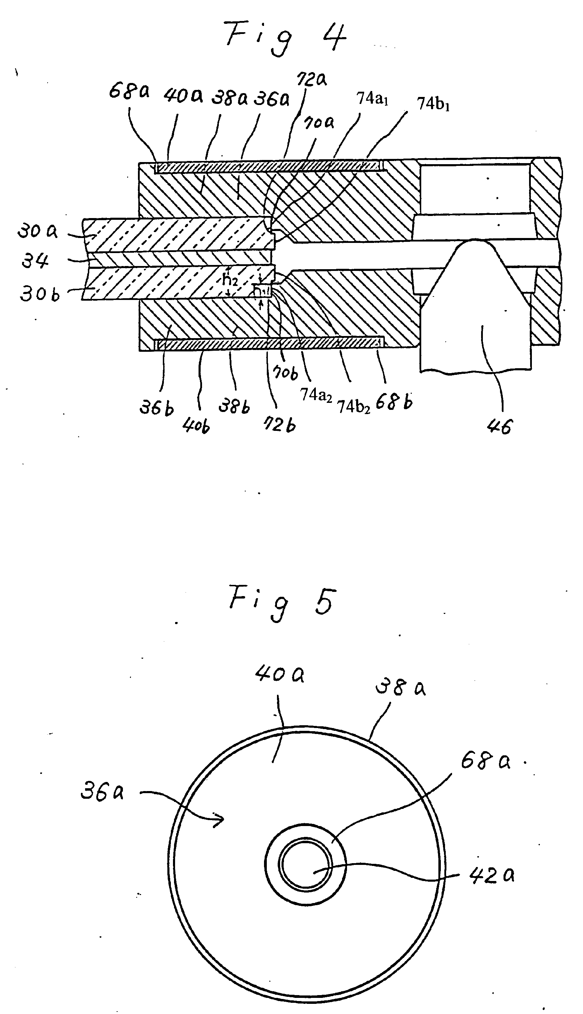

As shown in FIGURES 4 and 5, magnetic members 40a and 40b of attractable members 36a and 36b are formed from a metal plate into a completely flat and annular-shaped body, having apertures 66a and 66b in the center. Centering members 38a and 38b have annular depressions 68a and 68b formed on the outer surfaces thereof. Magnetic members 40a and 40b are located in annular depression 68a and 68b. Also, magnetic members 40a and 40b are bonded to centering members 38a and 38b by means of a bonding agent. Therefore, magnetic members 40a and 40b may be easily formed because of their completely flat and annular-shaped body. Further, magnetic members 40a and 40b may be simply mounted to centering members 38a and 38b by means of a bonding agent.

Depressions 68a and 68b have an inner diameter shorter than an inner diameter of each of magnetic members 40a and 40b and an outer diameter larger than an outer diameter of each of magnetic members 40a and 40b. Therefore, magnetic members 40a and 40b are slightly movable in the direction parallel to the surface of substrates 30a and 30b. As a result, differences in thermal expansion can be absorbed.

Centering members 38a and 38b are a discoid of thickness t and have ring-shaped projections 70a and 70b coaxial with center holes 42a and 42b. Projections 70a and 70b fit in holes 72a and 72b of corresponding substrates 30a and 30b. Projections 70a and 70b are fixedly bonded to the outer surface of substrates 30a and 30b, or the opposite surface thereof, i.e., the surface of which recording layers 32a and 32b are formed, respectively. Thus, centering members 38a and 38b are coaxially positioned relatively to substrates 30a and 30b. Also, centering members 38a and 38b are bonded to substrates 30a and 30b by means of a bonding agent, such as epoxy resin.

In order to shorten the time for forming substrates 30a and 30b, bores 72a and 72b of substrates 30a and 30b are formed during the process of injection molding. Bores 72a and 72b, formed in this manner, including large-diameter portions 74a₁ and 74a₂ and small-diameter portions 74b₁ and 74b₂ are formed by ripping off the resin at the gate portion by means of a punch. Moreover, the diameter of portion 74a₁ and 74a₂ are high in accuracy, while the inner peripheral surface of portions 74b₁ and 74b₂ are not smooth, and their diameter are low in accuracy. Recording layers 32a and 32b are formed on that surface of each substrates 30a and 30b on the side of portions 74b₁ and 74b₂.

As described above, large-diameter portions 74a₁ and 74a₂ of bores 72a and 72b are formed with higher dimensional accuracy than small-diameter portions 74b₁ and 74b₂. Therefore, height h1 of projections 70a and 70b of each centering members 38a and 38b is shorter than axial length h2 of portions 72a and 72b so that projections 70a and 70b may engage only portions 74a and 74b of higher accuracy. Thus, centering members 38a and 38b are fixed with high positional accuracy, without being substantially eccentric to substrates 30a and 30b.

Bores 72a and 72b of each substrates 30a and 30b are worked with high accuracy, so as to be coaxial with a spiral pre-groove (not shown) for recording and reproduction, formed on substrates 30a and 30b. Likewise, the outer peripheral surface projections 70a and 70b and center holes 42a and 42b of each centering members 38a and 38b are worked with high accuracy, so as to be coaxial with each other. Thus, when centering members 38a and 38b are fixed to substrates 30a and 30b the center of the pre-groove is accurately in alignment with that of holes 42a and 42b or the center of rotation of substrates 30a and 30b. It is, therefore, possible to prevent lowering of recording/reproducing accuracy or increase of access time, which will be caused if the pregroove is eccentric to the rotational center of substrates 30a and 30b.

From an idealistic viewpoint, substrates 30a and 30b and centering members 30a and 38b should be formed of the same material. The reason is that if substrates 30a and 30b and centering members 38a and 38b are more or less different in coefficient of thermal expansion, bonded or fitted regions between the substrates 30a and 30b and centering members 38a and 38b will be distorted in response to a temperature change.

In the embodiments described above, an optical recording disk with two substrates each having a recording layer is used for the information memory medium. Alternatively, however, the information memory medium may be provided with, e.g., a so-called single-side recording type disk that has a recording layer on only one side of the disk, and a disk whose both substrate surfaces are bonded without an intervening spacer. Further, magnetic attraction members may be formed only of a magnet.

## Claims

1. A recording disc adapted to be supported on a turntable (20) of a drive mechanism (22) so as to be rotated therewith,
said recording disc comprising a disc-shaped body (28) having a central opening and a recording layer (32) on the body for storing information, a centering member (38) disposed at the centre of the disc-shaped body (28) for centering the disc on the turntable (20), the coefficient of thermal expansion of the centering member being substantially the same as that of the disc-shaped body (28) and the centering member including a magnetically attractable member (40);
the dimensions of the centering member being such that, in use, an annular part of the disc-shaped body surrounding the centering member (38) engages with a support surface (52) of the turntable and the centering member enters into a recess in the turntable with the attractable member (40) attracted towards, but spaced from, a magnetic means (56) on the turntable;
the outer surface of the part of the centering member which enters into the recess has an annular depression (68) in it;
the magnetically attractable member is in the form of a flat annular plate (40) located in the depression (68) and bonded to the centering member; and
characterized in that the centering member (38) has a ring-shaped projection (70) coaxial with the centre thereof and which projects into the central opening of the disc-shaped body and is bonded to the disc-shaped body.

2. A recording disc as claimed in claim 1 characterised in that the inner diameter of the depression (68) is less than the inner diameter of the magnetic plate and the outer diameter of the depression is greater than the outer diameter of the magnetic plate to provide annular gaps between the edges of the magnetic plate and the shoulders of the depression.

3. A recording disc as claimed in claim 1 or claim 2 characterised in that said centering member (38a, 38b) and said body (28) are formed of the same material.

4. A recording disc according to any preceding claim characterised in that the recording layer (32a) is an optical recording layer.

5. A recording disc according to claim 4 wherein the body (28) is of optically transparent material.

6. A recording disc according to any one of the preceding claims wherein another disc shaped body (28) is secured co-axial, parallel with and spaced from the said disc shaped body (28), each being provided with a centering member (38a, 38b) extending axially out from each body (28) to locate each magnetic member axially.

## Patentansprüche

1. Aufzeichnungsplatte, die ausgebildet ist, um auf einem Drehtisch (20) eines Antriebsmechanismus (22) gehalten zu werden, um so mit diesem gedreht zu werden,
wobei die Aufzeichnungsplatte einen scheibenähnlichen Körper (28) hat, der eine mittlere Öffnung und auf dem Körper eine Aufzeichnungsschicht (32) aufweist, um Informationen zu speichern, wobei mittig zum scheibenähnlichen Körper (28) ein Zentrierbauteil (38) vorgesehen ist, um die Platte auf dem Drehtisch (20) zu zentrieren, wobei der Wärmeausdehnungskoeffizient des Zentrierbauteils im wesentlichen gleich dem des scheibenähnlichen Körpers (28) ist, und wobei das Zentrierbauteil ein magnetisch anziehbares Bauteil (40) aufweist;
wobei die Abmessungen des Zentrierbauteils so gewählt sind, daß bei Betrieb ein ringförmiger, das Zentrierbauteil (38) umgebender Abschnitt des scheibenähnlichen Körpers an der Haltefläche (52) des Drehtisches anliegt und das Zentrierbauteil in eine Ausnehmung im Drehtisch eintaucht, wobei das anziehbare Bauteil (40) durch eine magnetische Einrichtung (56) auf dem Drehtisch angezogen, aber auf Abstand gehalten wird;
wobei die Außenfläche des Abschnitts des Zentrierbauteils, welcher in die Ausnehmung eintaucht, eine ringförmige Vertiefung (68) aufweist; und
wobei das magnetisch anziehbare Bauteil die Form einer ebenen, ringförmigen Platte (40) hat, die in der Vertiefung (68) angeordnet und mit dem Zentrierbauteil verbunden ist;
**dadurch gekennzeichnet,** daß das Zentrierbauteil (38) einen ringförmigen, koaxial zu dessen Mittelpunkt verlaufenden Vorsprung (70) aufweist, der in die mittlere Öffnung des scheibenähnlichen Körpers ragt und mit dem scheibenähnlichen Körper verbunden ist.

2. Aufzeichnungsplatte nach Anspruch 1, **dadurch gekennzeichnet,** daß der Innendurchmesser der Vertiefung (68) kleiner ist als der Innendurchmesser der magnetischen Platte, und daß der Außendurchmesser der Vertiefung größer ist als der Außendurchmesser der magnetischen Platte, um zwischen den Kanten der magnetischen Platte und den Schultern der Vertiefung ringförmige Spalten zu bilden.

3. Aufzeichnungsplatte nach Anspruch 1 oder Anspruch 2, **dadurch gekennzeichnet,** daß das Zentrierbauteil (38a, 38b) und der Körper (28) aus dem gleichen Material hergestellt sind.

4. Aufzeichnungsplatte nach einem der vorhergehenden Ansprüche, **dadurch gekennzeichnet,** daß die Aufzeichnungsschicht (32a) eine optische Aufzeichnungsschicht ist.

5. Aufzeichnungsplatte nach Anspruch 4, wobei der Rörper (28) aus optisch transparentem Material besteht.

6. Aufzeichnungsplatte nach einem der vorhergehenden Ansprüche, wobei ein weiterer scheibenähnlicher Körper (28) koaxial, parallel und beabstandet zum plattenähnlichen Körper (28) befestigt ist, wobei jeder mit einem Zentrierbauteil (38a, 38b) versehen ist, das sich von jedem Körper (28) aus axial erstreckt, um jeweils ein magnetisches Bauteil axial aufzunehmen.

## Revendications

1. Disque d'enregistrement étudié pour être supporté par la platine (20) d'un mécanisme d'entraînement (22) de manière à ce que ce disque tourne en même temps que le mécanisme d'entraînement,
ce disque d'enregistrement comprenant un corps en forme de disque (28) ayant une ouverture centrale et une couche d'enregistrement (32) sur le corps pour y stocker des informations, un élément de centrage (38) placé au centre du corps en forme de disque (28) pour centrer le disque sur la platine (20), le coefficient de dilatation thermique de l'élément de centrage étant substantiellement le même que celui du corps en forme de disque (28) et l'élément de centrage comprenant un élément attirable magnétiquement (40);
les dimensions de l'élément de centrage permettant, pendant le fonctionnement, à une partie annulaire du corps en forme de disque entourant l'élément de centrage (38) de s'engager sur la face de support (52) de la platine et permettant à l'élément de centrage de pénétrer dans un évidement dans la platine à l'aide de l'élément attirable (40) attiré vers le moyen magnétique (56) sur la platine, tout en restant à l'écart de ce moyen;
la face extérieure de la partie de l'élément de centrage qui pénètre dans l'évidement comporte une dépression annulaire (68) à l'intérieur;
l'élément attirable magnétiquement se présente sous la forme d'une plaque annulaire plate (40) logée à l'intérieur de la dépression annulaire (68) et fixée à l'élément de centrage; et
caractérisé par le fait que l'élément de centrage (38) comporte une saillie (70) en forme d'anneau qui occupe une position coaxiale avec le centre de l'élément de centrage qui se projette à l'intérieur de l'ouverture centrale du corps en forme de disque et est fixée au corps en forme de disque.

2. Disque d'enregistrement selon la revendication 1, caractérisé par le fait que le diamètre intérieur de la dépression (68) est inférieur au diamètre intérieur de la plaque magnétique et le diamètre extérieur de la dépression est plus grand que le diamètre extérieur de la plaque magnétique pour maintenir des intervalles annulaires entre les bords de la plaque magnétique et les épaulements de la dépression.

3. Disque d'enregistrement selon la revendication 1 ou la revendication 2, caractérisé par le fait que l'élément de centrage (38a, 38b) et le corps (28) sont formés dans le même matériau.

4. Disque d'enregistrement selon l'une quelconque des revendications ci-dessus, caractérisé par le fait que la couche d'enregistrement (32a) est une couche d'enregistrement optique.

5. Disque d'enregistrement selon la revendication 4 dans lequel le corps (28) est un matériau optiquement transparent.

6. Disque d'enregistrement selon l'une quelconque des revendications qui précèdent dans lequel un autre corps en forme de disque (28) est fixé co-axialement et parallèlement au corps en forme de disque (28) dont il est maintenu écarté, chacun de ces disques étant équipé d'un élément de centrage (38a, 38b) qui s'étend axialement et s'écarte de chaque corps (28) pour positionner chaque élément magnétique axialement.
